# NEW EUROPEAN PATENT SPECIFICATION

(11) **EP 1 681 337 B2**
(45) Date of publication and mention of the opposition decision: **13.05.2020**
(45) Mention of the grant of the patent: 01.12.2010
(21) Application number: 05075068.6
(22) Date of filing: 14.01.2005
(51) Int. Cl.: C10G 3/00

(54) **Method for the manufacture of hydrocarbons**
Verfahren zur Herstellung von Kohlenwasserstoffen
Procédé pour la production d'hydrocarbures

(43) Date of publication of application: 19.07.2006
(73) Proprietor: Neste Oil Oyj, 02150 Espoo (FI)
(72) Inventor: Murzin, Dmitry Yu, 20610 Turku (FI); Kubickova, Iva, 43601 Litvinov (CZ); Snare, Mathias, 20500 Turku (FI); Mäki-Arvela, Päivi, 20610 Turku (FI); Myllyoja, Jukka, 01710 Vantaa (FI)
(74) Representative: HGF B.V.

(56) References cited:
- EP-A- 1 489 157
- EP-A2- 1 396 531
- DE-A1- 3 340 711
- GB-A- 1 524 781
- US-A- 4 554 397
- US-A- 5 233 109
- GUSMAO J; ET AL: "UTILIZATION OF VEGETABLE OILS AS AN ALTERNATIVE SOURCE FOR DIESEL-TYPE FUEL: HYDROCRACKING ON REDUCED Ni/SiO2 AND SULPHIDED Ni-Mo/gamma-Al2O3", Catalysis Today, vol. 5, no. 4, 1 January 1989 (1989-01-01) , pages 533-544, XP003014030,
- LAURENT E; DELMON B: "STUDY OF THE HYDRODEOXYGENATION OF CARBONYL, CARBOXYLIC AND GUAIACYL GROUPS OVER SULFIDED COMO/GAMMA-AL2O3 AND NIMO/GAMMA-AL2O3 CATALYSTS: I. CATALYTIC REACTION SCHEMES", Applied Catalysis A: Gen,, vol. 109, no. 1, 17 February 1994 (1994-02-17), pages 77-96, XP009080160,

## Description

### Field of the invention

The invention relates to a method for the manufacture of hydrocarbons from renewable sources and particularly to a method for the manufacture of hydrocarbons suitable for the diesel fuel pool. The invention also relates to a method for the manufacture of hydrocarbons with decreased consumption of hydrogen.

### Background of the invention

Environmental interests and an increasing demand for diesel fuel encourage fuel producers to employ more intensively available renewable sources. However, known processes utilising such sources tend to result in an increase in carbon dioxide emissions with generally known negative effects. In the manufacture of diesel fuel the main interest is focused on vegetable oils and animal fats comprising triglycerides of fatty acids. Long, straight and mostly saturated hydrocarbon chains of fatty acids correspond chemically to the hydrocarbons present in diesel fuels. However, the neat vegetable oils display inferior properties, particularly extreme viscosity, and thus their use in fuels is limited.

Conventional approaches for converting vegetable oils into fuels comprise transesterification, hydrogenation and cracking, among others. Triglycerides, which form the main component in vegetable oils, are converted into the corresponding esters by the transesterification reaction with an alcohol in the presence of catalysts. However, poor low-temperature properties of the products obtained limit their wider use in regions with colder climatic conditions. Schmidt, K., Gerpen J.V.: *SAE paper* 961086 teaches that the presence of oxygen in esters results in undesirable higher emissions of NOₓ, in comparison to conventional diesel fuels.

Thermal and catalytic cracking of bio-materials like vegetable oils and animal fats lead to a wide spectrum of products. US 5,233,109 describes an example of such process using catalysts containing alumina and another component, such as silica or alumino-silicate. The reactions are generally unselective and less valuable products are formed as well. The unsaturated and aromatic hydrocarbons present in the liquid fraction make these products unattractive for the diesel pool.

Patents US 4,992,605 and US 5,705,722 describe processes for the production of diesel fuel additives by conversion of bio-oils into saturated hydrocarbons under hydroprocessing conditions. The conversion of the carboxylic group into a methyl group requires relatively high hydrogen partial pressure of above 4.5 MPa. Hydrogen consumption is further increased due to eventual side reactions such as methanation and reverse water-gas shift reaction. The high hydrogen consumption limits the use of such processes, especially in refineries where the hydrogen balance is already almost negative because of complying with legislative requirements.

Undesired oxygen may be removed from fatty acids or esters by deoxygenation. The deoxygenation of bio-oils and fats to hydrocarbons, suitable as diesel fuel products, may be performed in the presence of catalysts under hydroprocessing conditions. During hydrodeoxygenation conditions oxogroups are hydrogenated and therefore this reaction requires rather high amounts of hydrogen. Additionally, hydrogen is consumed in side reactions as well.

Decarboxylation of fatty acids results in hydrocarbons with one carbon atom less than the original molecule. The feasibility of decarboxylation varies greatly with the type of carboxylic acid used as the starting material. Activated carboxylic acids containing electron-attracting substituents in the position alpha or beta with respect to the carboxylic group lose carbon dioxide spontaneously at slightly elevated temperatures. In this case, the RC-COOH bond is weakened by the electron shift along the carbon chain.

The majority of fatty acids are, however, not activated. The positive induction effect of the carbon chain evokes a high electron density in the position alpha with respect to the carboxylic group making thus the release of CO₂ difficult. Although the decarboxylation of activated and non-activated carboxylic acids is thermodynamically comparable, the activation energy is significantly higher in the case of the latter one. Therefore drastic conditions or the presence of a catalyst are required to overcome the energetic barrier.

The fusion of alkaline salts of fatty acids with the corresponding hydroxides to hydrocarbons is known already from the 19th century. The reaction is highly unselective and ketones and cracking products, as well as undesired highly alkaline waste are formed with low conversion.

Further, there exist a number of decarboxylation reactions used mainly in organic synthesis. Most of them proceed via free radical mechanism.

US 4,262,157 discloses a decarboxylation process utilising diazacycloalkenes and Cu salts, wherein lauric acid reacts to form n-undecane with 51 % yield at 320 °C. Also decarboxylation of unsaturated acids to form hydrocarbons with one carbon less is described.

Indirect decarboxylation routes are also known, involving transformation of carboxylic acids into the corresponding halides, followed by their dehalogenation. Hunsdiecker's and Kochi's reactions are examples of such reactions and both reactions proceed via free radical mechanism.

Available alternative routes involve electrochemical and photo-catalytic decompositions. An example of electrochemical decomposition is the Kolbe electrolysis, wherein the reaction is started by anodic mono-electron oxidation leading to the formation of carboxylate radicals. Their subsequent decarboxylation results in probable formation of hydrocarbon radicals. Their dimerization or less often disproportionation leads to the termination of the free radical reaction. The electrolytic systems for the hydrocarbon synthesis usually comprise aqueous solvents, organic co-solvents, added salts and platinum electrodes. Under such conditions the reaction yields 50-90% of coupling hydrocarbon products. The main side products comprise 1-unsaturated hydrocarbons formed via disproportionation. A similar radical mechanism applies also for photo-catalytically initiated reactions.

Two step deoxygenation of oxygen-containing bio-oil compounds is described by Parmon et al: Catalysis Today 35 (1997) 153-162. The model compound, phenol, is in the first step treated with carbon monoxide over bimetallic alloy RhCu. The product, benzoic acid, consequently decarboxylates in the presence of PtPd or RuPd alloys in the second step

The complexity of the decarboxylation reactions listed above and/or the low yield and very often, also the hazardous materials applied in the reactions, are the main drawbacks of these approaches.

Decarboxylation of carboxylic acids to hydrocarbons by contacting carboxylic acids with heterogeneous catalysts was suggested by Maier, W. F. et al: Chemische Berichte (1982), 115(2), 808-12. They tested Ni/Al₂O₃ and Pd/SiO₂ catalysts for decarboxylation of several carboxylic acids. During the reaction the vapours of the reactant passed through a catalytic bed together with hydrogen. Hexane represented the main product of the decarboxylation of the tested compound heptanoic acid. When nitrogen was used instead of hydrogen no decarboxylation was observed.

US 4,554,397 discloses a process for the manufacture of linear olefins from saturated fatty acids or esters. The catalytic system consists of nickel and at least one metal selected from the group consisting of lead, tin and germanium. According to the examples, when other catalysts, such as Pd/C were used, low catalytic activity, cracking to saturated hydrocarbons or formation of ketones when Raney-Ni was used, were observed.

Decarboxylation, accompanied with hydrogenation of oxo-compound, is described in Laurent, E., Delmon, B.: Applied Catalysis, A: General (1994), 109(1), 77-96 and 97-115, wherein hydrodeoxygenation of biomass derived pyrolysis oils over sulphided CoMo/γ-Al₂O₃ and NiMo/γ-Al₂O₃ catalysts was studied. Di-ethyldecanedioate (DES) was used among others as a model compound and it was observed that the rates of formation of the decarboxylation product (nonane) and the hydrogenation product (decane) were comparable under hydrotreating conditions (260-300 °C, 7 MPa, in hydrogen). NiMo/γ-Al₂O₃ showed slightly higher selectivity towards decarboxylation products in comparison to CoMo/-γ-Al₂O₃ catalyst. The presence of hydrogen sulphide, in contrary to ammonia, also promoted the decarboxylation, particularly when NiMo catalysts were used.

A process for converting an ester-containing vegetable oil into hydrocarbons is disclosed in GB 1,524,781. The conversion to hydrocarbons is performed over a catalyst containing an admixture of silica-alumina with an oxide of a transition state metal of groups IIA, IIIA, IVA, VA, VIA, VIIA, or VIIIA of the periodic table at the reaction temperatures of 300 - 700 °C. The products formed are reported to be free from oxygenated compounds (other than carbon dioxide and water). In accordance with the examples, extensive cracking is, however, observed.

Based on the above it can be seen that there exists an evident need for an industrially applicable catalytic method for the manufacture of hydrocarbons from renewable sources, utilising the decarboxylation reaction.

### Object of the invention

An object of the invention is a method for the manufacture of hydrocarbons from renewable sources.

A further object of the invention is a method for the manufacture of hydrocarbons suitable for the diesel fuel pool.

A still further object of the invention is to provide a method for the manufacture of hydrocarbons with decreased consumption of hydrogen.

A still further object of the invention is to provide an industrially applicable catalytic method for the manufacture of hydrocarbons from renewable sources, utilising the decarboxylation/decarbonylation reaction.

Characteristic features of the method according to the invention are provided in the claims.

Here decarboxylation/decarbonylation is understood to mean the removal of carboxyl oxygen, such as triglyceride oxygen, through CO₂ (decarboxylation) or through CO (decarbonylation).

Hydrodeoxygenation (HDO) of triglycerides means removal of water using hydrogen.

Here deoxygenation is understood to mean removal of carboxyl oxygen, such as triglyceride oxygen by any means previously described.

### Summary of the invention

The present invention relates to a catalytic method for the manufacture of hydrocarbons, which are suitable for diesel fuel pool, from renewable sources, such as plant and vegetable oils and fats and animal and fish oils and fats. The invention concerns the transformation of the starting materials comprising fatty acids, derivatives of fatty acids, such as esters of fatty acids as well as triglycerides of fatty acids, or metal salts of fatty acids, or combinations of thereof, into hydrocarbons with minimal consumption of hydrogen, by contacting the starting material with a heterogeneous catalyst comprising at least one metal selected from the metals belonging to the group VIII of the Periodic Table. The hydrocarbon product formed via the decarboxylation/decarbonylation reaction has one carbon atom less than the original fatty acid or fatty acid portion of its derivate.

### Detailed description of the invention

It has now been surprisingly found that the deoxygenation of starting materials originating from renewable sources can be achieved by using an alternative reaction route - decarboxylation/decarbonylation, where oxygen is removed in the form of CO and CO₂ from the original compounds in the starting mate-rial/feedstock. In this way hydrocarbons can be manufactured from plant and vegetable oils and fats as well as animal and fish oils and fats without high consumption of hydrogen.

The present invention is particularly directed to a method for the manufacture of hydrocarbons in the diesel fuel distillation range from renewable sources. The reaction conditions and the catalyst employed in the decarboxylation/decarbonylation process of bio-oils are essential for the invention. Under suitable conditions, hydrogen is required only for the reduction of the catalyst. Consequently, the consumption of hydrogen can be decreased significantly. The method also comprises a catalyst pre-treatment step. Additionally the method may comprise an optional isomerization step.

The method according to the invention comprises the steps wherein a feedstock originating from renewable sources and optionally a solvent or a mixture of solvents are brought into contact with an optionally pre-treated heterogeneous catalyst selected from supported catalysts containing one or more Group VIII metals selected from platinum and palladium, and a decarboxylation/decarbonylation reaction is carried out at a temperature of 200 - 400°C, preferably 250 - 350°C under a pressure from atmospheric pressure to 15 MPa, preferably of 0.1-5 MPa to yield as a product a mixture of linear hydrocarbons, preferably linear paraffins boiling in the range of 180 - 350°C, the diesel fuel range, and having one carbon atom less than the original fatty acid chain.

The heterogeneous catalyst is pre-treated with hydrogen at a temperature of 100 - 500°C, preferably 150 - 250°C. The pre-treatment of the heterogeneous catalyst is preferable as it ensures the activity of the catalyst.

The decarboxylation/decarbonylation reaction is carried out in liquid phase, thus the reaction pressure is higher than the saturation vapour pressure of the feedstock at a given reaction temperature. The reaction pressure ranges from atmospheric pressure to 15 MPa, taking into consideration the properties of the feedstock.

Optionally a gas flow comprising an inert gas such as nitrogen, helium or argon, hydrogen or combinations thereof may be used for removing gaseous products formed during the reaction.

The obtained product, hydrocarbon mixture, is optionally isomerized in order to convert further the obtained hydrocarbons to isomerized hydrocarbons with improved cold properties, such as cloud point and pour point.

In the isomerization step, the pressure varies in the range of 2-15 MPa, preferably in the range of 3-10 MPa and the temperature varies between 200 and 500 °C, preferably between 280 and 400 °C. In the isomerization step, isomerization catalysts known in the art may be used. Suitable isomerization catalysts contain a molecular sieve and/or a metal selected from Group VIII of the Periodic Table and/or a carrier. Preferably, the isomerization catalyst contains SAPO-11 or SAPO-41 or ZSM-22 or ZSM-23 or ferrierite and Pt, Pd or Ni and Al₂O₃ or SiO_{2.}Typical isomerization catalysts are, for example, Pt/SAPO-11/Al₂O₃, Pt/ZSM-22/Al₂O₃, Pt/ZSM-23/Al₂O₃ and Pt/SAPO-11/SiO₂. An isomerized product, which is a mixture of branched hydrocarbons and preferably branched paraffins boiling in the range of 180 - 350°C, the diesel fuel range, and having one carbon atom less than the original fatty acid chain, is obtained. Additionally some gasoline and gas may be obtained.

### Starting material

The starting material or feedstock originates from renewable sources, such as fats and oils from plants and/or animals and/or fish and compounds derived from them, also known as bio-oils. Examples of suitable bio-oils are plant and vegetable oils and fats, animal fats and oils, fish fats and oils, and mixtures thereof containing fatty acids and/or fatty acid esters. Particularly suitable materials are wood-based and other plant-based and vegetable-based fats and oils such as rapeseed oil, colza oil, canola oil, tall oil, sunflower oil, soybean oil, hempseed oil, olive oil, linseed oil, mustard oil, palm oil, peanut oil, castor oil, coconut oil, as well as fats contained in plants bred by means of gene manipulation, animal-based fats such as lard, tallow, train oil, and fats contained in milk, as well as recycled fats of the food industry and mixtures of the above.

Preferably the feedstock comprises C8 - C24 fatty acids, derivatives of said fatty acids, such as esters of fatty acids as well as triglycerides of fatty acids, metal salts of said fatty acids, or combinations of thereof. The fatty acids or fatty acid derivatives, such as esters may be produced via hydrolysis of bio-oils or by their fractionalization, or by esterification reactions of triglycerides. Suitably triglyceride fractions of rapeseed oil, linseed oil, sunflower oil, tallow and lard and fractions of tall oil are used as the feedstock.

The hydrocarbon products obtained utilizing the method according to the invention have one carbon atom less than the original fatty acid or the fatty acid fraction of its derivate in the starting material.

### Reaction conditions

The decarboxylation/decarbonylation reaction conditions may vary with the feedstock used. The reaction is carried out in liquid phase. The reaction is carried out at a temperature of 200 - 400°C, preferably 250 - 350°C. The reaction may be conducted under atmospheric pressure. However, in order to maintain the reactants in the liquid phase it is preferable to use higher pressure than the saturation vapour pressure of the feedstock at a given reaction temperature and thus the reaction pressure ranges from atmospheric pressure to 15 MPa and preferably from 0.1 to 5 MPa, depending on the properties of starting material.

### Solvent

The optional solvent is selected from the group consisting of hydrocarbons, such as paraffins, isoparaffins, naphthenes and aromatic hydrocarbons in the boiling range of 150 - 350°C, and recycled process streams containing hydrocarbons, and mixtures thereof, preferably the recycled product streams obtained from the method are used.

### Gas flow

Optionally a gas flow, which may also be called as carrier gas, comprising an inert gas such as nitrogen, helium or argon, or hydrogen or combinations thereof may be used for removing gaseous products formed during the reaction. The gas flow may be combined with the feedstock or it may be led to the reaction mixture or it may be led to different parts in the reactor. The feedstock may contain 0.1- 40 vol. %, preferably 2 - 15 vol.% of hydrogen in order to maintain appropriate long-term catalyst activity and to prevent the formation of unsaturated products, especially in the case when esters and triglycerides are used as the starting material. Hydrogen is preferably added to the feedstock or to the reaction mixture.

### Catalyst

The catalyst in the decarboxylation/decarbonylation reaction is a supported heterogeneous catalyst comprising at least one active metal selected from the metals belonging to the Group VIII of the Periodic Table. Suitable metals are Pd and Pt, supported on carbonaceous supports, such as C. Preferably the support is activated carbon or other carbonaceous support. Structured catalyst supports, such as carbon fibres, carbon nanotubes attached to monoliths and carbon cloths are suitable support materials as well.

Loading of the active metal varies in the range of 0.5 - 20 wt%, preferably 2 - 8 wt%. In the case nickel is used, the loading varies in the range of 2 - 55 wt%, preferably 10 - 30 wt%.

The reaction may be carried out in batch, semi-batch or continuous mode of reaction, in reactors such as trickle-bed, continuous tubular or continuous stirred tank reactors in order to separate the gaseous CO₂ and the light hydrocarbons extricated from esters and triglycerides of fatty acids. Thus the desired diesel fraction products, suitable for combustion in conventional engines, may be produced.

The method according to the invention has several advantages. It provides a novel way for the manufacture of hydrocarbons, suitable for the use as diesel fuel or for the manufacture of diesel fuel, via decarboxylation/decarbonylation of a feedstock, particularly oxygenated feedstock, originating from renewable sources. The consumption of hydrogen in the method is low, the reaction temperature is sufficiently low when compared to thermal non-catalytic processes and thus no undesired decomposition of the feedstock was observed. Hydrogen, which is currently almost exclusively produced from fossil fuels, is only needed for the optional pre-treatment of the catalyst; however, it may be present also in the reactant stream in low concentrations. It is not consumed in side reactions or in direct reduction of carboxylic groups. Undesired side reactions, such as cracking, are negligible.

Further, in the method according to the invention, the oxygenated feedstock, such as C8 - C24 fatty acids, as well as derivatives of fatty acid such as esters of fatty acids, triglycerides of fatty acids, or metal salts of said fatty acid are converted to the desired hydrocarbons with high selectivity. The hydrocarbon product has one carbon atom less than original fatty acid or fatty acid portion of its derivative. The structure of the obtained hydrocarbon product corresponds to the main chain of the starting material.

No hazardous solvents are used in the method and neither hazardous waste is formed. Carbon dioxide released during the process originates from renewable sources and thus its production does not contribute on greenhouse effect.

Conducting of the reaction in a liquid phase is preferential and brings several advantages over a gas phase reaction. A gas phase reaction requires high reaction temperature in order to vaporize feedstock, which causes decomposition of high-boiling compounds and supports endothermic side reactions as well as deactivation due to sintering and fouling. Maintaining of the reactants in liquid phase yields also more feasible process control.

The invention is illustrated in the following with examples presenting some preferable embodiments of the invention. However, it is evident to a man skilled in the art that the scope of the invention is not meant to be limited to these examples.

### Examples

### Example 1

### Decarboxylation of stearic acid

Series of experiments were carried out in a Parr autoclave equipped with a heating mantle, stirrer, baffles and bubble-unit. 1 g of a catalyst, presented in table 1 below, was placed into the autoclave and pre-treated under hydrogen flow at a temperature of 200 °C. After the pre-treatment, 85 g of dodecane (solvent) and 4.5 g of stearic acid were fed into the reactor. The reaction temperature was kept at 300 °C, while passing helium gas through the reactor. The reactor pressure of 0.8 MPa maintained the reactants and products in liquid phase with the exception of CO₂, which was removed with helium gas acting as carrier gas, from the reactor. The conversions of stearic acid and the selectivities towards the desired product, heptadecane, after 90 minutes of the reaction with respect to catalyst used in the reaction are also listed in table 1. From the table in can be seen that particularly preferable catalysts were Pd/C and Pt/C.

**Table 1**

| **Catalyst** | **Metal loading, wt%** | **Conversion, %** | **Selectivity, mol. %** |
|---|---|---|---|
| Ir/Al₂O₃* | 2 | 12 | 38 |
| Ni/Al₂O₃* | 17 | 8 | 14 |
| Ni/Cr₂O₃* | 60 | 5 | 22 |
| Ni/SiO₂* | 6 | 10 | 16 |
| Pd/Al₂O₃* | 5 | 12 | 38 |
| Pd/C | 10 | 25 | 78 |
| Pd/C | 5 | 100 | 97 |
| Pd/C | 1 | 20 | 64 |
| Pt/ Al₂O₃* | 5 | 7 | 26 |
| Pt/C | 5 | 43 | 95 |
| Ru/C* | 5 | 4 | 17 |

| | | | |
|---|---|---|---|
| * Reference Examples | | | |

### Example 2

### Decarboxylation of stearic acid in the presence of a bimetallic catalyst

In a procedure similar to the one presented in Example 1, a bimetallic catalyst, Pd(8 wt%)Pt(2 wt%)/C, was used. After 90 minutes of reaction 40 mol. % of stearic acid was converted with the selectivity of 83 mol. % towards n-heptadecane formation.

### Example 3

### Decarboxylation of stearic acid in the presence of different gases

In the reaction apparatus described in Example 1, a set of three experiments was performed. In all cases, 1 g of the catalyst (Pd(5 wt%)/C) was charged into the reactor, followed by its reduction under hydrogen flow at 200 °C. 45 g of stearic acid and 40 g of dodecane were subsequently fed into the reactor. During the reactions carried out at 300 °C, reactor pressure of 1.9 MPa was maintained by helium gas, a gas mixture of hydrogen (5 vol. %) and argon (95 vol. %), and hydrogen gas, respectively, in the individual experiments. The conversions of stearic acid and selectivities towards n-heptadecane are listed in the following table 2. From table 2 it can be seen that a mixture of hydrogen (5 vol. %) with an inert gas yields a high selectivity.

**Table 2**

| **Gas** | **Reaction time, min** | **Conversion, %** | **Selectivity, mol. %** |
|---|---|---|---|
| Helium | 300 | 41 | 83 |
| Hydrogen | 360 | 49 | 94 |
| Hydrogen (5 vol. %) + argon (95 vol. %) | 360 | 62 | 93 |

### Example 4

### Decarboxylation of ethyl stearate

In the reaction apparatus described in Example 1, another set of three experiments was run. In all cases, 1 g of the catalyst (Pd (5 wt%)/C) was charged into the reactor followed by its reduction under hydrogen flow at 200 °C. 50 g of ethyl stearate and 40 g of dodecane were subsequently fed into the reactor. During the reactions performed at 300 °C, 330 °C, and 360 °C reactor pressures of 1.9 MPa, 2.3 MPa, and 2.9 MPa, respectively, were maintained by gas mixture comprising hydrogen (5 vol. %), and argon (95 vol. %). The conversions of ethyl stearate and selectivities towards n-heptadecane formation are listed in the following table 3.

**Table 3**

| **Reaction temperature, °C** | **Reactor pressure, bar** | **Conversion, %** | **Selectivity, mol. %** |
|---|---|---|---|
| 300 | 18 | 33 | 74 |
| 330 | 22 | 66 | 71 |
| 360 | 28 | 100 | 76 |

### Example 5

### Decarboxylation of behemic acid and nonanoic acid

In a procedure similar to the one in Example 3.54 g of behemic acid (purity 89 %) and 45 g of dodecane were placed into the reactor. The conversion of 45 % and selectivity of 90 mol.% towards n-heneicosane formation were achieved after six hours of reaction at 300 °C and under a reactor pressure of 1.9 MPa of hydrogen (5 vol. %) - argon (95 vol. %) gas mixture. Similarly, nonanoic acid was used as the reactant. The reaction proceeded with comparable yield of the decarboxylation product, octadecane.

### Example 6

### Decarboxylation of grycerol tristearate

In a procedure similar to the one in Example 3.47 g of glycerol tristearate and 45 g of dodecane were charged into the reactor. During the reaction conducted at 360 °C, reactor pressure of 4.2 MPa was maintained by a flow of a gas mixture comprising hydrogen (5 vol. %) - argon (95 vol.%). Only traces of glycerol tristearate (0.08 wt%) were identified in the liquid phase after six hours reaction time. C17 - hydrocarbon fraction formed 64 wt% of liquid products, based on GPC analyses. n-Heptadecane was the main product in the mixture of C17-hydrocarbon isomers.

### Example 7

### Isomerization of n-paraffins formed during decarboxylation/decarbonylation

Paraffinic feed, containing 94 wt-% of C15-C18 n-paraffins, was isomerized with an isomerization catalyst at 340 °C and 60 bar in a fixed bed reactor. Hydrogen was fed to the reactor 600 1/(1 oil feed). The isomerization catalyst was a platinum-based commercial catalyst. The product of isomerization contained 67 wt-% of C15-C18 isoparaffins. The cloud point of the product was -12 °C, compared to 26 °C for the n-paraffin feed.

## Claims

1. A method for the manufacture of hydrocarbons suitable for diesel fuel pool, **characterized in that** the method comprises the steps wherein
a feedstock originating from renewable sources and comprising fatty acids or derivatives of fatty acids or combinations thereof, and optionally a solvent or a mixture of solvents are brought into contact with
a pre-treated heterogeneous catalyst containing one or more Group VIII metals selected from platinum, and palladium,
supported on carbonaceous supports,
wherein the heterogeneous catalyst is pre-treated with hydrogen at a temperature of 100-500°C, preferably 150-250°C before contacting it with the feedstock, and
a decarboxylation/decarbonization reaction is carried out at a temperature of 200-400°C, preferably 250-350°C under a pressure from 0.1 MPa to 15 MPa, preferably of 0.1-5 MPa to yield as a product a mixture of hydrocarbons.

2. The method according to claim 1, **characterized in that** the product is isomerized under a pressure in the range of 2-15 MPa, preferably 3-10 MPa and that a temperature between 200 and 500°C, preferably between 280 and 400°C in the presence of an isomerization catalyst.

3. The method according to any one of claims 1-2, **characterized in that** the decarboxylation/decarbonylation reaction is carried out in liquid phase.

4. The method according to any one of claims 1-3, **characterized in that** the renewable sources are fats and oils from plants and/or animals and/or fish and compounds derived therefrom.

5. The method according to any one of claims 1-4, **characterized in that** the feedstock is selected from wood-based, plant-based and vegetable-based fats and oils, fats contained in plants bred by means of gene manipulation, animal-based fats and oils, fish based fats and oils and recycled fats of the food industry and mixtures thereof.

6. The method according to any one of claims 1-5, **characterized in that the** feedstock is selected from rapeseed oil, colza oil, canola oil, tall oil, sunflower oil, soybean oil, hempseed oil, olive oil, linseed oil, mustard oil, palm oil, peanut oil, castor oil, coconut oil, lard, tallow, train oil, and fats contained in milk.

7. The method according to any one of claims 1-6, **characterized in that** the feedstock comprises triglyceride fractions of rapeseed oil, linseed oil, sunflower oil, tallow and lard, or fractions of tall oil.

8. The method according to any one of claims 1-7, **characterized in that** the feedstock comprises fatty acids or fatty acid esters produced by hydrolysis or by esterification reactions of triglycerides of fatty acids, or metal salts of fatty acids, or combinations thereof.

9. The method according to any one of claims 1-8, **characterized in that** the catalyst is supported on carbon fibres, carbon nanotubes attached to monoliths or carbon cloths, preferably on activated carbon or other carbonaceous support.

10. The method according to any one of claims 1-9, **characterized in that** the solvent is selected from the group consisting of hydrocarbons, preferably paraffins, isoparaffins, naphthenes and aromatic hydrocarbons in the boiling range of 150- 350°C and recycled process streams containing hydro carbons and combinations thereof.

11. The method according to any one of claims 8-10, **characterized in that** the fatty acids are C8- C24 fatty acids.

## Patentansprüche

1. Verfahren für die Herstellung von Kohlenwasserstoffen, die für Dieselkraftstoffpool geeignet sind, **dadurch gekennzeichnet, dass** das Verfahren die Schritte umfasst, wobei ein Ausgangsmaterial, das von erneuerbaren Quellen stammt und Fettsäuren oder Derivate von Fettsäuren oder Kombinationen davon und optional ein Lösungsmittel oder ein Gemisch aus Lösungsmitteln umfasst, mit einem vorbehandelten heterogenen Katalysator in Kontakt gebracht wird, der ein oder mehrere Gruppe-VIII-Metalle enthält, die aus Platin und Palladium gestützt an kohlenstoffhaltigen Stützen ausgewählt sind, wobei der heterogene Katalysator mit Wasserstoff bei einer Temperatur von 100-500 °C, bevorzugt 150-250 °C vorbehandelt wird, bevor er mit dem Ausgangsmaterial kontaktiert wird, und eine Decarboxylierungs-/Decarbonylierungsreaktion bei einer Temperatur von 200-400 °C, bevorzugt 250-350 °C unter einem Druck von 0,1 MPa bis 15 MPa, bevorzugt von 0,1-5 MPa durchgeführt wird, um als Produkt ein Gemisch aus Kohlenwasserstoffen zu erhalten.

2. Verfahren nach Anspruch 1, **dadurch gekennzeichnet, dass** das Produkt unter einem Druck im Bereich von 2-15 MPa, bevorzugt 3-10 MPa und bei einer Temperatur zwischen 200 und 500 °C, bevorzugt zwischen 280 und 400 °C, in der Gegenwart eines Isomerisierungskatalysators isomerisiert wird.

3. Verfahren nach einem der Ansprüche 1-2, **dadurch gekennzeichnet, dass** die Decarboxylierungs-/Decarbonylierungsreaktion in flüssiger Phase durchgeführt wird.

4. Verfahren nach einem der Ansprüche 1-3, **dadurch gekennzeichnet, dass** die erneuerbaren Quellen Fette und Öle von Pflanzen und/oder Tieren und/oder Fischen und davon stammenden Verbindungen sind.

5. Verfahren nach einem der Ansprüche 1-4, **dadurch gekennzeichnet, dass** das Ausgangsmaterial aus holzbasierten, pflanzenbasierten und gemüsebasierten Fetten und Ölen, Fetten, die in Pflanzen enthalten sind, die durch Genmanipulation gezüchtet werden, tierisch basierten Fetten und Ölen, fischbasierten Fetten und Ölen und recycelten Fetten der Lebensmittelindustrie und Mischungen davon ausgewählt ist.

6. Verfahren nach einem der Ansprüche 1-5, **dadurch gekennzeichnet, dass** das Ausgangsmaterial aus Rapsöl, Rüböl, Canolaöl, Tallöl, Sonnenblumenöl, Sojaöl, Hanfsamenöl, Olivenöl, Leinsamenöl, Senföl, Palmöl, Erdnussöl, Rizinusöl, Kokosöl, Talg, Schmalz, Tranöl und Fetten, die in Milch enthalten sind, ausgewählt ist.

7. Verfahren nach einem der Ansprüche 1-6, **dadurch gekennzeichnet, dass** das Ausgangsmaterial Triglyceridfraktionen von Rapsöl, Leinsamenöl, Sonnenblumenöl, Talg und Schmalz oder Fraktionen von Tallöl umfasst.

8. Verfahren nach einem der Ansprüche 1-7, **dadurch gekennzeichnet, dass** das Ausgangsmaterial Fettsäuren oder Fettsäureester umfasst, die durch Hydrolyse oder durch Veresterungsreaktionen von Triglyceriden von Fettsäuren oder Metallsalzen von Fettsäuren oder Kombinationen davon erzeugt werden.

9. Verfahren nach einem der Ansprüche 1-8, **dadurch gekennzeichnet, dass** der Katalysator an C, Kohlenstofffasern, Kohlenstoffnanoröhrchen, die an Monolithen oder Kohlenstofftüchern angebracht sind, bevorzugt an aktiviertem Kohlenstoff oder einer anderen kohlenstoffhaltigen Stütze gestützt wird.

10. Verfahren nach einem der Ansprüche 1-9, **dadurch gekennzeichnet, dass** das Lösungsmittel aus der Gruppe ausgewählt ist, die aus Kohlenwasserstoffen besteht, bevorzugt Paraffinen, Isoparaffinen, Naphthenen und aromatischen Kohlenwasserstoffen im Siedebereich von 150-350 °C und recycelte Prozessabläufe Kohlenwasserstoffe und Kombinationen davon enthalten.

11. Verfahren nach einem der Ansprüche 8-10, **dadurch gekennzeichnet, dass** die Fettsäuren C8-C24-Fettsäuren sind.

## Revendications

1. Procédé de fabrication d'hydrocarbures appropriés pour un bassin de carburant diesel, **caractérisé en ce que** le procédé comprend les étapes dans lesquelles une charge d'alimentation provenant de sources renouvelables et comprenant des acides gras ou des dérivés d'acide gras ou des combinaisons de ceux-ci, et éventuellement un solvant ou un mélange de solvants sont mis en contact avec un catalyseur hétérogène prétraité contenant au moins un métal du Groupe VIII choisi parmi le platine et le palladium supporté par des supports carbonés dans lequel le catalyseur hétérogène est prétraité avec de l'hydrogène à une température comprise entre 100 et 500 °C, de préférence comprise entre 150 et 250 °C avant de le mettre en contact avec la charge d'alimentation, et une réaction de décarboxylation/décarbonylation est réalisée à une température comprise entre 200 et 400 °C, de préférence comprise entre 250 et 350 °C sous une pression comprise entre 0,1 MPa et 15 MPa, de préférence comprise entre 0,1 et 5 MPa, pour donner en tant que produit un mélange d'hydrocarbures.

2. Procédé selon la revendication 1, **caractérisé en ce que** le produit est isomérisé sous une pression dans la plage comprise entre 2 et 15 MPa, de préférence comprise entre 3 et 10 MPa et à une température comprise entre 200 et 500 °C, de préférence comprise entre 280 et 400 °C en présence d'un catalyseur d'isomérisation.

3. Procédé selon l'une quelconque des revendications 1 à 2, **caractérisé en ce que** la réaction de décarboxylation/décarbonylation est effectuée en phase liquide.

4. Procédé selon l'une quelconque des revendications 1 à 3, **caractérisé en ce que** les sources renouvelables sont des graisses et des huiles provenant de plantes et/ou d'animaux et/de poissons et des composés dérivés de celles-ci.

5. Procédé selon l'une quelconque des revendications 1 à 4, **caractérisé en ce que** la charge d'alimentation est choisie parmi des graisses et des huiles à base de bois, à base de plantes et à base de végétaux, des graisses contenues dans des plantes produites au moyen d'une manipulation génétique, des graisses et des huiles à base d'animaux, des graisses et des huiles à base de poisson et des graisses recyclées de l'industrie alimentaire, et des mélanges de celles-ci.

6. Procédé selon l'une quelconque des revendications 1 à 5, **caractérisé en ce que** la charge d'alimentation est choisie parmi l'huile de graines de colza, l'huile de colza, l'huile de canola, le tallol, l'huile de tournesol, l'huile de soja, l'huile de chanvre, l'huile d'olive, l'huile de lin, l'huile de moutarde, l'huile de palme, l'huile d'arachide, l'huile de ricin, l'huile de noix de coco, le lard, le suif, l'huile de baleine, et des graisses contenues dans le lait.

7. Procédé selon l'une quelconque des revendications 1 à 6, **caractérisé en ce que** la charge d'alimentation comprend des fractions de triglycéride d'huile de graines de colza, d'huile de lin, d'huile de tournesol, de suif et de lard, ou des fractions de tallol.

8. Procédé selon l'une quelconque des revendications 1 à 7, **caractérisé en ce que** la charge d'alimentation comprend des acides gras ou des esters d'acide gras produits au moyen de réactions d'électrolyse ou d'estérification de triglycérides d'acides gras, ou des sels métalliques d'acides gras, ou des combinaisons de ceux-ci.

9. Procédé selon l'une quelconque des revendications 1 à 8, **caractérisé en ce que** le catalyseur est supporté sur du C, des fibres de carbone, des nanotubes de carbone attachés à des monolithes ou des tissus de carbone, de préférence sur du carbone activé ou sur d'autres supports carbonés.

10. Procédé selon l'une quelconque des revendications 1 à 9, **caractérisé en ce que** le solvant est choisi parmi le groupe constitué des hydrocarbures, de préférence des paraffines, des isoparaffines, des naphtènes et des hydrocarbures aromatiques dans la gamme d'ébullition comprise entre 150 et 350 °C et des flux de procédé recyclé contenant des hydrocarbures et des combinaisons de ceux-ci.

11. Procédé selon l'une quelconque des revendications 8 à 10, **caractérisé en ce que** les acides gras sont des acides gras en C8 - C24.
